Europäisches Patentamt

European Patent Office

Office européen des brevets

(11) Publication number: **0 328 740**
**A2**

## (12) EUROPEAN PATENT APPLICATION

(21) Application number: 88118113.5

(22) Date of filing: 31.10.88

(51) Int. Cl.⁴: **B23Q 3/00 , B23Q 3/06**

(30) Priority: 18.02.88 IT 4002688

(43) Date of publication of application:
23.08.89 Bulletin 89/34

(84) Designated Contracting States:
AT BE CH DE ES FR GB GR IT LI LU NL SE

(71) Applicant: OMGA S.P.A.
Via Carpi-Ravarino 146
I-41010 Limidi di Soliera (Modena)(IT)

(72) Inventor: Ghizzoni, Arrigo
Via Ramazzini, 23
I-41012 Carpi(IT)

(74) Representative: Modiano, Guido et al
MODIANO, JOSIF, PISANTY & STAUB
Modiano & Associati Via Meravigli, 16
I-20123 Milan(IT)

(54) Device for locking parts having mixed-line profiles on a worktable of machining units.

(57) The device comprises vertical presser elements (5) provided with means (9) for contact with the parts (4) and self-duplicating the profiles (4a) thereof, carried by the machining unit (1), which presser elements are furthermore provided with devices (13) for the automatic pushing in locking position, the part (4) in abutment against a stop element (14) provided on the worktable (3).

FIG. 3

EP 0 328 740 A2

# DEVICE FOR LOCKING PARTS HAVING MIXED-LINE PROFILES ON A WORKTABLE OF MACHINING UNITS

The present invention relates to a device for locking parts with mixed-line profiles on a worktable of machining units.

Locking elements are known of several types to fasten parts to be machined on a worktable.

In the case of, for example, units which cut wood strips into splines of required lengths for manufacturing frames, the locking elements, though they excellently perform the operation for which they are intended, need a laborious and lengthy adjustment in order to adapt the various components to the generally mixed-line and convoluted shape of the surface of the splines to be locked.

It is in fact necessary to adjust the position of various pressers and/or clamps so that, during the cutting operation the strips are firmly fixed to the machine without suffering any surface scratching or damage.

The technical aim of the present invention is to obviate the above described disadvantages of the prior art devices by providing a device, for locking parts having mixed-line profiles, on a worktable of machining units, capable of ensuring a safe locking, together with a rapid and efficient self-adaptation capability of the presser elements, and free from any possibility of damaging the surfaces of the locked parts.

This aim and these objects are achieved by a device for locking parts having mixed-line profiles on worktables of machining units, characterized in that it comprises presser elements provided with means for contact with the parts, self-duplicating the profiles thereof, carried by the machining unit, said presser elements being furthermore provided with automatic devices for pushing, in locking position, the parts in abutment against a stop element provided on the worktable.

Further characteristics and advantages of the invention will become apparent from the description of a preferred but not exclusive embodiment of a device for locking parts having mixed-line profiles on a worktable of machining units, illustrated only by way of non-limitative example in the accompanying drawings, wherein:

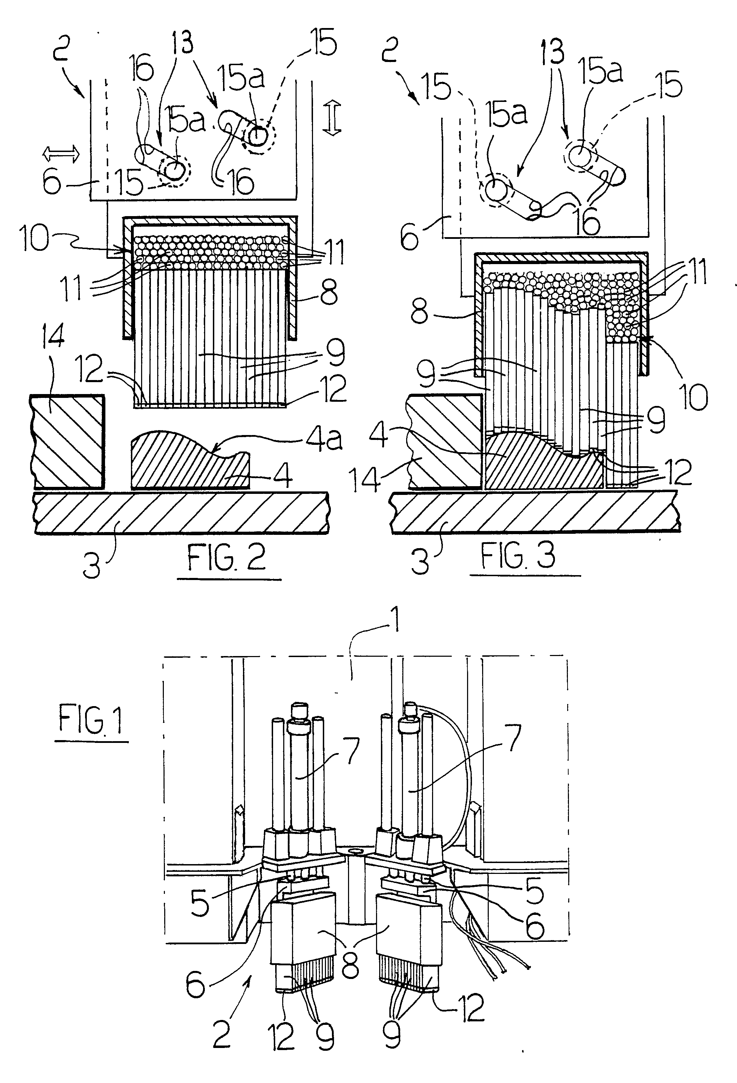

figure 1 is a perspective inner view of a machining unit fitted with the device according to the invention;

figures 2 and 3 are schematic front elevated enlarged views of the device, respectively in release and locking positions.

With reference to the cited figures, 1 generally indicates a machining unit provided with a locking device 2 for locking parts 4, having a mixed-line profile 4a, on a worktable 3.

Said locking device 2 comprises at least one pair of vertical presser elements 5. Each element 5 comprises a vertical plate 6 coupled to a respective fluidodynamic cylinder 7, at one end. Cylinder 7 has a vertical stroke and is rigidly associated with the machine 1 and constitutes said means for the vertical movement of the plates 6.

The plates 6 support respective box-like containers 8 and a plurality of flattened parallel splines 9 partially protrude from the lower open face of the containers 8 (not visible in the drawings). The splines 9 can slide independently from one another in a vertical direction and in close mutual contact; said box-like containers 8 and flattened splines 9 constitute the means for contact with the part 4.

Means 10 are provided in the containers 8, above the splines 9, and are adapted to elastically and continuously push against the part 4. In a preferred embodiment, the means 10 comprises a plurality of small heavy balls 11 weighing on the upper ends of the splines 9 inside the box-like containers 8, the lower ends of the splines being provided with scratch-preventing contact pads 12.

Each of the presser elements 5 is provided with devices 13 for automatically pushing, in the locking position, the part 4 in abutment against a stop element 14 provided on the worktable 3. Each of the devices 13 comprises at least one pair of substantially horizontal screws, or pins, 15, retaining each of the box-like containers 8 to the corresponding shaped vertical plate 6. The stems 15a of the screws 15 are slideable in pairs of slots 16 parallel to one another and having preset lengths, their ends being directed towards the outside of the machine 1 and being slightly inclined upwards.

The operation of the device is as follows: in a release position, as illustrated schematically in figure 2, the presser elements 5 are completely raised from the part 4 by the action of the fluidodynamic cylinders 7; the flattened splines 9, under the action of the heavy balls 11 which position themselves spontaneously inside the box-like containers 8 to constitute a substantially constant layer weighing thereon, downwardly form a rectilinear front. The stems 15a of the screws 15 are at the lowest end of the slots 16.

When it is necessary to lock a part 4 having a mixed-line upper profile 4a against the worktable 3 and the stop element 14 of the machining unit 1, the fluidodynamic cylinders 7 push the plates 6, and consequently the box-like containers 8 downwards: when the lower ends of the various splines 9 make contact with the mixed-line surface 4a, they arrange themselves at various levels so as to duplicate the shape of the surface, automatically retracting inside the box-like containers 8 which lower until the downward stroke of the pressers 5 ceases; this determines a resettling of the position of the balls 11 which spontaneously, occupy the greater volumes generated above the splines which have retracted by a smaller or nil amount, freeing, on the other hand, the corresponding smaller volumes above the further retracted splines 9.

As the downward thrusting action of the cylinders 7 continues, the stems 15a of the screws 15 slide in the inclined slots 16 up to the upwardly directed end; the horizontal component of this movement causes a relative sliding between the box-like containers 8 and the plates 6 determines a horizontal translatory motion of said containers 8, with the splines 9 already firmly resting on the part 4, the containers 8 translate horizontally towards the stop element 14. The part 4 is thus pushed to abut against the stop element 14 and is locked to allow its subsequent machining.

By lifting the pressers 5 everything returns to the previously described release position; the splines 9 mutually realign and the heavy balls 11 arrange themselves above them, reconstituting a substantially uniform layer; the stems 15a slide in the slots 16 and again move, by gravity, to the lower ends thereof, determining the reverse movement between the box-like containers 8 and the plates 6.

The locking device 2 is thus again ready for a subsequent operation.

In practice it has been observed that the invention thus described achieves the intended aims.

The invention thus conceived is susceptible to numerous modifications and variations, all of which are within the scope of the inventive concept.

Furthermore all the details may be replaced with other technically equivalent elements.

In practice, the materials employed, as well as the dimensions, may be any according to the requirements without thereby abandoning the scope of the protection of the following claims.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Device for locking parts having mixed-line profiles on worktables of machining units (1), characterized in that it comprises presser elements (5) provided with means for contact with the parts (4), self-duplicating the profiles (4a) thereof, carried by the machining unit (1), said presser elements (5) being furthermore provided with automatic devices (13) for pushing, in locking position the parts in abutment against a stop element (14) provided on the worktable.

2. Locking device according to claim 1, characterized in that said presser elements (5) each consist of a shaped vertical plate (6) rigidly coupled to vertical movement means (7) rigidly associated with the machining unit.

3. Locking device according to claim 2, characterized in that said vertical movement means are constituted by respective vertical fluidodynamically actuated cylinders (7).

4. Locking device according to claim 1 and alternatively to claim 3, characterized in that said vertical movement means are constituted by preloadable compression springs accommodated in corresponding seats.

5. Locking device according to claim 1, characterized in that said means for contact with the part (4), self-duplicating their profiles (4a), each consist of a box-like container (8) of a plurality of flattened splines (9), arranged mutually parallel and independently slideable, downwardly protruding for a portion from an open face of said containers and vertically and automatically retracting therein by contact with the profiles (4a) of the part (4), in said locking position of the presser elements, above said splines there being provided means (11) for the elastic and constant thrusting of these last towards the parts.

6. Locking device according to claim 4, characterized in that said spline thrust elements are constituted by a plurality of heavy balls (11), self-positioning according to the differentiated vertical retraction of the splines which copies the profile (4a) of the part (4).

7. Locking device according to claim 5, characterized in that the splines (9) are provided, at the points of contact with the parts, with scratch-preventing pads (12).

8. Locking device according to claims 1, 2 and 5, characterized in that said devices (13) for automatically thrusting the parts against said stop element consist, for each presser element, of at least one pair of substantially horizontal screws or pins (15) for retaining the respective box-like container (8) to the corresponding vertical shaped plate (6), said screws (15) having stems (15a) slideable in parallel slots (16) provided in each plate and inclined upwards in the direction of the stop element (14), allowing a calculated and adjustable relative movement between said containers and said plates.

FIG. 2

FIG. 3

FIG. 1